# EUROPÄISCHE PATENTSCHRIFT

(11) **EP 1 685 917 B1**
(45) Veröffentlichungstag und Bekanntmachung des Hinweises auf die Patenterteilung: **07.11.2007**
(21) Anmeldenummer: 06000124.5
(22) Anmeldetag: 04.01.2006
(51) Int. Cl.: B23B 31/20, A61C 1/14

(54) **Werkzeugaufnahme**
Tool holder
Raccordement d'outil

(30) Priorität: 11.01.2005 DE 102005001368
(43) Veröffentlichungstag der Anmeldung: 02.08.2006
(73) Patentinhaber: LPKF Laser & Elektronika d.o.o., 4206 Zgornje Jezersko (SI)
(72) Erfinder: Zepic, Janez, 1000 Ljubljana (SI); Podlipec, Bostjan, 1360 Vrhnika (SI)
(74) Vertreter: Scheffler, Jörg

(56) Entgegenhaltungen:
- EP-A- 1 232 731
- DE-A1- 19 748 735
- US-A- 4 874 314
- US-A- 6 155 826

## Beschreibung

Die Erfindung betrifft eine Werkzeugaufnahme für ein rotierbares Werkzeug, insbesondere Bohr- und/oder Fräskopf, mit einer mit einem Antriebsmotor verbindbaren Antriebswelle und mit einer mit der Antriebswelle drehfest verbundenen Spannzange zur Halterung des Werkzeuges, wobei die Antriebswelle und die Spannzange mittels eines Kuppelelementes zur Drehmomentübertragung formschlüssig verbunden sind.

Eine solche Werkzeugaufnahme ist aus DE 197 48 735 A1 als Bohr- und/oder Fräskopf mit einer mittels eines Schnellwechselmechanismus betätigbaren Spannzange bekannt, wobei die Spannzange einstückig, ein einziges Bauteil bildend, mit einer Antriebswelle verbunden ist. Die Antriebswelle und mit ihr die Spannzange sind mit Hilfe eines Hebels axial verschiebbar, und zwar in einer in Axialrichtung festliegenden Spannhülse. Durch die axiale Verschiebung der Spannzange in der Spannhülse wird ein kraftschlüssiger Eingriff von Greifarmen der Spannzange und einer konischen Innenfläche der Spannhülse aufgehoben, wodurch ein von den Greifarmen gehaltenes Werkzeug freigegeben wird.

Darüber hinaus ist ein zahnmedizinisches Handstück mit einer Spannvorrichtung, die eine in einer Spindel gehaltene Spannbuchse und einen mittels eines Druckknopfes betätigbaren Stößel aufweist, aus US 6 155 826 A bekannt. Durch Betätigung des Stößels, der auf einer Mittelachse von Spindel und Spannbuchse angeordnet ist, kann ein von der Spannbuchse gehaltenes, als Zahnbohrer ausgebildetes Werkzeug freigegeben werden.

Ausgehend vom Stand der Technik liegt der Erfindung die Aufgabe zugrunde, eine Werkzeugaufnahme zu schaffen, die bei einfachem Aufbau das Werkzeug mit hoher Sicherheit hält.

Die Aufgabe wird erfindungsgemäß mit einer Werkzeugaufnahme der eingangs beschriebenen Art gelöst, bei der das Kuppelelement gegenüber der Spannzange das Werkzeug lösend axial verschiebbar ist.

Mit der Erfindung kann durch einfache axiale Verschiebung des Kuppelelementes relativ zu der Spannzange das Werkzeug freigegeben und aus der Werkzeugaufnahme zum Beispiel am Ende eines Arbeitsvorganges und/oder zum Werkzeugwechsel entnommen werden. Vorteilhaft sind die Antriebswelle und die Spannzange über das Kuppelelement ständig formschlüssig miteinander verbunden, so dass durchgehend - auch während des Lösens des Werkzeugs - eine Drehmomentübertragung von der Antriebswelle auf die Spannzange ermöglicht ist. Das Kuppelelement erfüllt erfindungsgemäß somit eine Doppelfunktion: Einerseits kann mit dem Kuppelelement das Werkzeug in der Spannzange gelöst werden, andererseits ist mit dem Kuppelelement die Motorleistung des Antriebsmotors durchgängig auf die Spannzange und das gegebenenfalls in dieser gehalterte Werkzeug übertragbar. Die Werkzeugaufnahme kommt daher mit vergleichsweise wenigen Bauteilen aus und ist kostengünstig in der Herstellung. Vorzugsweise sind die Antriebswelle und die Spannzange mittels des Kuppelelementes auch zum Werkzeugwechsel formschlüssig miteinander verbunden, wobei hier grundsätzlich zum Beispiel aber auch an eine reibschlüssige Verbindung gedacht werden kann. Aufgrund einer axial unveränderlichen Position der das Werkzeug halternden Spannzange sowie der axialen Verschiebbarkeit des Kuppelelementes (und nicht der Spannzange) und einer dadurch ermöglichten hochpräzisen Werkzeugführung ist die erfindungsgemäße Werkzeugaufnahme besonders geeignet für Werkzeugmaschinen zur Herstellung von Feinstrukturen, insbesondere Bohr- und/oder Fräsmaschinen für Leiterplatten, Graviermaschinen, 3-D-Bearbeitungsmaschinen. Darüber hinaus ist die Werkzeugaufnahme sehr verschleißarm und dauerhaltbar. Die erfindungsgemäße Werkzeugaufnahme weist ferner den besonderen Vorteil einer hohen Rundlaufgenauigkeit auf. Außerdem kann mit der Erfindung vorteilhaft eine sehr hohe Ausziehkraft des Werkzeuges, beispielsweise eine Ausziehkraft in einer Größenordnung von 500 N bei einem Werkzeugaußendurchmesser (entsprechend einem Spannzangeninnendurchmesser) von 3 mm, für das Werkzeug erzielt werden. Im Vergleich dazu kann mit aus dem Stand der Technik bekannten Spannzangen, die zudem zum Aufbringen einer Gegenkraft für die Ausziehkraft nachteilig eine sehr starke Schraubenfeder erfordern, eine Ausziehkraft lediglich in einer Größenordnung von ca. 100 bis 150 N erzielt werden. Demgegenüber weist die erfindungsgemäße Werkzeugaufnahme ein wesentlich geringeres Gewicht sowie einen kompakteren Aufbau auf und ist kostengünstiger in Herstellung und Einsatz; gleichzeitig ist die erfindungsgemäße Werkzeugaufnahme erheblich betriebssicherer als die bisher bekannten vergleichbaren Werkzeugaufnahmen, und die zum Öffnen der Spannzange erforderliche Kraft ist deutlich geringer. Ein weiterer großer Vorteil der Erfindung besteht darin, dass in die Spannzange im Sinne einer Kombi-Spannzange mehrere Funktionen integriert sind, nämlich zum einen das Halten des Werkzeuges, zum anderen der Werkzeugwechsel und zum weiteren die Drehmomentübertragung von dem Antriebsmotor zum Werkzeug.

Gemäß einer vorteilhaften Weiterbildung der Erfindung lassen sich Aufbau und Herstellung der Werkzeugaufnahme weiter vereinfachen, wenn die Antriebswelle und das Kuppelelement ein einziges Bauteil bildend miteinander verbunden sind. Vorzugsweise sind Antriebswelle und Kuppelelement einstückig ausgebildet.

Einer Gefahr einer Beschädigung der Spannzange beim Einführen oder Entnehmen von Werkzeugen in die beziehungsweise aus der Spannzange kann vorteilhaft dadurch entgegengetreten werden, dass gemäß einer anderen Weiterbildung der Erfindung die Spannzange in ihrem der Antriebswelle zugewandten Endbereich einen ersten Innendurchmesser und in ihrem der Antriebswelle abgewandten Endbereich einen zweiten Innendurchmesser aufweist, wobei der zweite Innendurchmesser größer ist als der erste Innendurchmesser. Dabei wird das Werkzeug von der Spannzange in deren der Antriebswelle zugewandten Endbereich, das heißt in einem einer werkzeugseitigen Spannzangenöffnung abgewandten Bereich, gehalten, wodurch sich eine besonders stabile und feste Halterung des Werkzeuges ergibt.

Gemäß einer anderen vorteilhaften Weiterbildung der Erfindung kann die Betriebssicherheit der Werkzeugaufnahme dadurch zusätzlich erhöht werden, dass das Kuppelelement zumindest einen in die Spannzange eingreifenden Kuppelansatz aufweist.

Dabei ergibt sich vorteilhaft ein besonders einfacher Aufbau der Werkzeugaufnahme, wenn gemäß einer Weiterbildung der Erfindung der Kuppelansatz an seinem der Spannzange zugewandten Ende einen Keil aufweist. Es ist dabei von besonderem Vorteil, wenn der Keil durchgängig ausgebildet ist, so dass er einen einzigen Kuppelansatz bildet und den Durchmesser der Spannzange vorzugsweise vollständig übergreift. Auf diese Weise kann eine große Eingriffsfläche für eine gute Kraftübertragung sowie ein sehr sicherer Eingriff in die Spannzange erzielt werden. Darüber hinaus ist eine die Betriebssicherheit weiter erhöhende präzise Oberflächenbearbeitung des Keiles, beispielsweise durch Polieren, auf einfache Weise ermöglicht.

Einer anderen vorteilhaften Weiterbildung der Erfindung gemäß weist das Kuppelelement an einem der Spannzange zugewandten Ende eine zentrische Ausnehmung auf. Eine solche Ausnehmung, die beispielsweise als Sackloch ausgebildet sein kann, bietet den Vorteil, dass das Werkzeug durch die Spannzange hindurch und in diese Ausnehmung des Kuppelelementes hinein greifen kann, so dass zum einen die Führung des Werkzeuges weiter verbessert werden kann und zum anderen die Werkzeugaufnahme bei unverändert kompaktem Aufbau auch zur Aufnahme langer Werkzeuge geeignet ist.

Nach einer anderen vorteilhaften Weiterbildung der Erfindung weist die Spannzange zumindest einen axial ausgerichteten Spannzangenschlitz auf, und es greift der Kuppelansatz in den Spannzangenschlitz ein. So kann in einfacher Weise durch Verschieben des Kuppelelementes mit dem Kuppelansatz gegenüber dem Spannzangenschlitz die Spannzange zum Beispiel geweitet und das Werkzeug dadurch freigegeben werden.

Ein in den Abmessungen kompakter Aufbau bei gleichzeitig geringem Gewicht der Werkzeugaufnahme wird vorteilhaft dadurch ermöglicht, dass gemäß einer Weiterbildung der Erfindung der Spannzangenschlitz an dem der Antriebswelle zugewandten Ende der Spannzange eine axiale Spannzangenöffnung bildet.

Die Federeigenschaften der Spannzange und damit das Halten des Werkzeuges werden gemäß einer vorteilhaften Weiterbildung der Erfindung dadurch verbessert, dass der Spannzangenschlitz in einer von der Antriebswelle weg gewandten Richtung eine zunehmende Schlitzbreite aufweist, das heißt die Schlitzbreite erweitert sich in der von der Antriebswelle weg gewandten Richtung.

Eine Vereinfachung der Lagerung von Antriebswelle und Spannzange sowie ein weiter verbesserter Rundlauf des Werkzeuges ergibt sich nach einer anderen vorteilhaften Weiterbildung der Erfindung, wenn eine die Antriebswelle und die Spannzange halternde Spindelachse vorgesehen ist.

Dabei wird die Stabilität der Werkzeugaufnahme vorteilhaft zusätzlich dadurch erhöht, dass gemäß einer Weiterbildung der Erfindung die Spannzange in einer zentrischen Durchgangsausnehmung der Spindelachse angeordnet ist und an einem Axialanschlag der Spindelachse anliegt.

Gemäß einer vorteilhaften Weiterbildung der Erfindung wird der Lauf des Werkzeuges weiter verbessert, wenn die Spannzange in der Spindelachse fest gelagert ist. Durch eine starr und fest in der Spindelachse angeordnete Spannzange wird zudem, insbesondere gegenüber einer axial verschiebbaren Anordnung der Spannzange wie sie aus dem Stand der Technik bekannt ist, der Verschleiß von Spannzange und Spindelachse minimiert.

Um die Ausziehkraft des Werkzeuges, zum Beispiel beim Fräsen mit einer niedrigen Geschwindigkeit in Aluminium, noch weiter zu erhöhen, wird gemäß einer vorteilhaften Weiterbildung der Erfindung vorgeschlagen, dass eine die Spannzange gegenüber der Spindelachse arretierende Schraube vorgesehen ist.

Gemäß einer anderen vorteilhaften Weiterbildung der Erfindung kann ein unbeabsichtigtes Lösen des Werkzeuges im Betrieb zuverlässig vermieden werden, wenn eine einer Axialverschiebung des Kuppelelementes entgegenwirkende Druckfeder vorgesehen ist. Mit einer solchen Ausführungsform ist dennoch ein einfaches Freigeben des Werkzeuges ermöglicht, es ist für eine beabsichtigte Axialverschiebung des Kuppelelementes lediglich die Federkraft der Druckfeder zu überwinden.

Ferner ist gemäß einer anderen vorteilhaften Weiterbildung der Erfindung eine Reibkupplung zur Übertragung einer die Axialverschiebung des Kuppelelementes bewirkenden Axialkraft auf das Kuppelelement vorgesehen. Infolgedessen wird - da die Spannzange durch Axialverschiebung des Kuppelelementes geöffnet wird und die dazu erforderliche Kraft über eine Reibkupplung übertragen wird - verhindert, dass eine rotierende Spannzange und/oder ein rotierendes Kuppelelement (gegebenenfalls einschließlich Antriebswelle) beim Öffnen, das heißt beim Lösen des Werkzeuges, mit einem nicht rotierenden Bauteil in Eingriff kommt. Die Werkzeugaufnahme wird so in einfacher Weise vor Beschädigungen geschützt, und zwar insbesondere dann, wenn vom üblichen Betriebsfall, welcher bedeutet: beim Werkzeugwechsel zuerst Antriebsmotor abschalten, dann Betätigungselement (zum Beispiel Handhebel) bedienen und damit Spannzange öffnen und Werkzeug lösen sowie letztlich Werkzeug aus der Spannzange herausnehmen und Vorgang in umgekehrter Reihenfolge wiederholen, in der Weise abgewichen wird, dass der Antriebsmotor nicht abgeschaltet wird. Sowohl die Übertragung der Axialkraft auf das Kuppelelement als auch die Axialverschiebung des Kuppelelementes sind vorzugsweise völlig unabhängig vom Motorantrieb, das heißt von der Drehmomentübertragung vom Antriebsmotor zum Werkzeug.

Man könnte sich grundsätzlich vorstellen, dass Reibflächen aufweisende Reibelemente der Reibkupplung radial in Eingriff bringbar sind. Hingegen können besonders hohe Kräfte dauerhaft sicher übertragen werden, wenn gemäß einer vorteilhaften Weiterbildung der Erfindung die Reibkupplung ein erstes, fest mit der Antriebswelle verbundenes Reibelement und ein zweites, an das erste Reibelement zur Anlage bringbares und gegenüber der Antriebswelle axial verschiebbares Reibelement aufweist. Die Reibkupplung ist bei dieser Ausführungsform zudem sehr verschleißarm.

Ein unerwünschter Verschleiß im Ruhezustand der Reibkupplung, das heißt bei betriebsmäßig getrennten Reibelementen, kann vorteilhaft dadurch verhindert werden, dass gemäß einer Weiterbildung der Erfindung das erste Reibelement und das zweite Reibelement werkzeugseitig gegen jeweils eine Druckfeder abgestützt sind. Auf diese Weise kann sichergestellt werden, dass die Reibelemente im Ruhezustand einen Abstand zueinander aufweisen und nicht verschleißen.

Gemäß einer anderen vorteilhaften Weiterbildung der Erfindung ist ein manuell bedienbares Betätigungselement, beispielsweise ein Handhebel, zur Axialverschiebung des Kuppeleiementes vorgesehen. Auf diese Weise ist ein Lösen des Werkzeuges auf einfache Weise bei hoher Betriebssicherheit möglich.

Einer anderen vorteilhaften Weiterbildung der Erfindung gemäß ist ein pneumatisch oder elektromotorisch oder hydromotorisch bedienbares Betätigungselement zur Axialverschiebung des Kuppelelementes vorgesehen. Dabei kann es sich beispielsweise um einen Handhebel mit einer Ausnehmung handeln, in die ein pneumatischer oder elektromotorischer oder hydromotorischer Antrieb eingreift, um den Hebel zu betätigen.

Eine Beschädigung der Werkzeugaufnahme, insbesondere durch Schmutzeintritt, wird gemäß einer vorteilhaften Weiterbildung der Erfindung zuverlässig vermieden, wenn eine axial bewegbare Hülse zur Abdeckung eines Verbindungsgelenkbereiches zwischen Betätigungselement und Kuppelelement und/oder Antriebswelle vorgesehen ist.

Gemäß einer anderen vorteilhaften Weiterbildung der Erfindung weist die Antriebswelle motorseitig eine die Antriebswelle mit einer Motorabtriebswelle verbindende, unabhängig von der Axialverschiebung des Kuppelelementes in Eingriff befindliche Kupplung auf, so dass einerseits mittels der Kupplung Antriebseinflüsse auf die Werkzeugaufnahme minimiert werden können und andererseits ein Werkzeugwechsel ohne Unterbrechung der Drehmomentübertragung vom Antriebsmotor vorgenommen werden kann. Bevorzugt kann die Kupplung zum Beispiel einen gegenüber der Motorabtriebswelle axial verschiebbaren und an der Motorabtriebswelle beispielsweise mittels einer Schraube festlegbaren Ansatz aufweisen, wodurch auf einfache Weise eine funktional insbesondere an die axiale Verschiebbarkeit des Kuppelelementes angepasste axiale Lage der Kupplung einstellbar ist.

Eine Verschmutzung der Werkzeugaufnahme insbesondere bei einer Werkstückbearbeitung, beispielsweise aufgrund umherfliegender Späne, kann zuverlässig dadurch verhindert werden, dass gemäß einer anderen vorteilhaften Weiterbildung der Erfindung in dem der Antriebswelle abgewandten Endbereich der Spannzange oder in dem der Antriebswelle abgewandten Endbereich der Spindelachse eine radial nach außen ragende Scheibe auf der Spannzange beziehungsweise der Spindelachse angeordnet ist. Die Scheibe verhindert einen Eintritt von Schmutzpartikeln in die Werkzeugaufnahme.

Eine besonders gute Funktionserfüllung und hohe Dauerhaltbarkeit der Scheibe ergibt sich, wenn gemäß einer vorteilhaften Weiterbildung der Erfindung die Scheibe aus Polytetrafluorethylen (PTFE) besteht.

Die Erfindung lässt zahlreiche Ausführungsformen zu. Zur weiteren Verdeutlichung ihres Grundprinzips sind verschiedene davon in der Zeichnung schematisch dargestellt und nachfolgend beschrieben. Die Zeichnung zeigt in
- Figur 1: eine Schnittansicht einer Werkzeugaufnahme mit einem Antriebsmotor,
- Figur 2: eine Seitenansicht einer Antriebswelle mit einer Spannzange der Werkzeugaufnahme nach Figur 1,
- Figur 3: eine weitere Seitenansicht der Antriebswelle mit der Spannzange nach Figur 2,
- Figur 4: die Spannzange nach Figuren 2, 3 in einer perspektivischen Ansicht,
- Figur 5: die Spannzange nach Figuren 2 bis 4 in einer Seitenansicht,
- Figur 6: eine Spindelachse mit einer Spannzange,
- Figur 7: eine Schnittansicht einer weiteren Werkzeugaufnahme mit einem Antriebsmotor,
- Figur 8: eine Schnittansicht einer Balancierungseinheit einer Werkzeugaufnahme und
- Figur 9: eine Schnittansicht einer Montageeinheit einer Werkzeugaufnahme.

Sich jeweils entsprechende Elemente sind in allen Figuren der Zeichnung mit gleichen Bezugszeichen versehen.

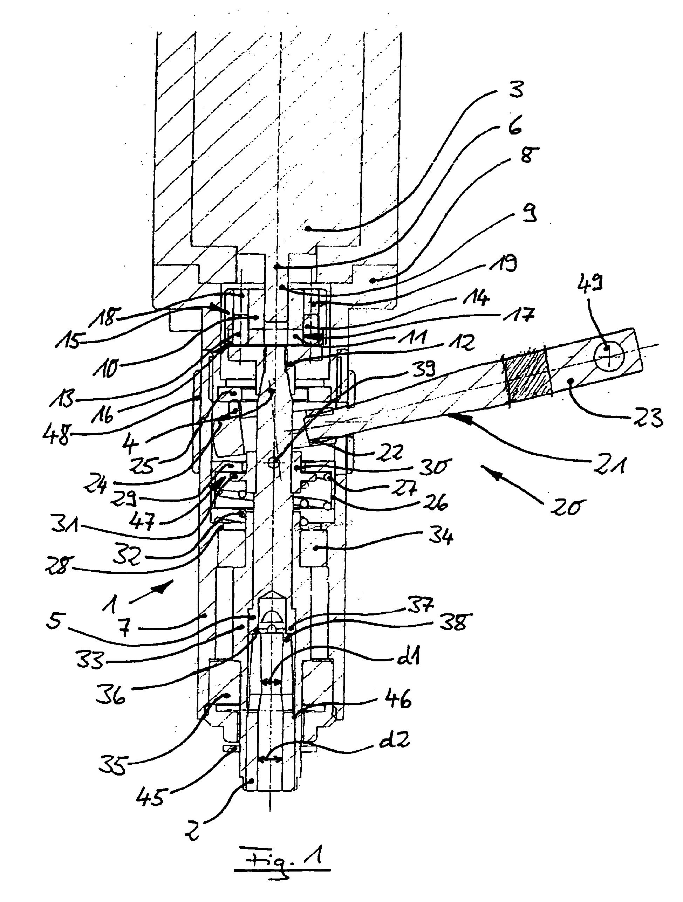

Figur 1 zeigt in einer Schnittansicht eine als Bohr- und Fräskopf ausgebildete Werkzeugaufnahme 1 für ein hier nicht dargestelltes rotierbares Werkzeug, das von einer Spannzange 2 der Werkzeugaufnahme 1 halterbar ist. Die Werkzeugaufnahme 1 weist ferner eine mit einem Antriebsmotor 3, zum Beispiel ein Elektromotor oder ein Druckluftmotor oder ein Hydromotor, verbundene Antriebswelle 4 auf. Die Spannzange 2 ist mit der Antriebswelle 4 zur Drehmomentübertragung von dem Antriebsmotor 3 auf das Werkzeug formschlüssig verbunden, und zwar mittels eines stößelförmigen Kuppelelementes 5. Die Halterung des Werkzeuges erfolgt in sehr stabiler Weise in einem der Antriebswelle 4 zugewandten Endbereich der Spannzange 2 zwischen Klemmfingern 38.

In diesem Ausführungsbeispiel sind die Antriebswelle 4 und das Kuppelelement 5 ein einziges Bauteil bildend miteinander verbunden, das Kuppelelement 5 ist Bestandteil der Antriebswelle 4. Das Kuppelelement 5 und mit diesem die Antriebswelle 4 ist axial, das heißt in Richtung einer Rotationsachse 6 der Werkzeugaufnahme 1, gegenüber der Spannzange 2 verschiebbar. Bei einer solchen Axialverschiebung des Kuppelelementes 5 erfolgt ein Lösen des Werkzeuges in der Spannzange 2. Nach dem Lösen des Werkzeuges kann dieses aus der Spannzange 2 entnommen werden.

Die Werkzeugaufnahme 1 weist ferner ein Gehäuse 7 mit einem Flanschbauteil 8 auf, mittels dessen der Antriebsmotor 3 an die Werkzeugaufnahme 1 angeschlossen ist. Auf einer Motorabtriebswelle 9 des Antriebsmotors 3 ist ein Ansatz 10 befestigt, der eine elastische Kupplungsscheibe 11 haltert.

Der Kupplungsscheibe 11 liegt ein motorseitig auf der Antriebswelle 4 der Werkzeugaufnahme 1 befestigter tellerartiger Aufsatz 12 gegenüber, der zusammen mit dem Ansatz 10 an der Motorabtriebswelle 9 und zwei Verbindungsstiften 13, 14 eine Kupplung 15 zwischen der Motorabtriebswelle 9 des Antriebsmotors 3 und der Antriebswelle 4 der Werkzeugaufnahme 1 bildet. Die Verbindungsstifte 13, 14 sind an dem Aufsatz 12 der Antriebswelle 4 der Werkzeugaufnahme 1 befestigt und greifen in korrespondierende Ausnehmungen 16, 17 der Kupplungsscheibe 11 ein. Fluchtend mit den Ausnehmungen 16, 17 der Kupplungsscheibe 11 befinden sich in dem Ansatz 10 an der Motorabtriebswelle 9 Ausnehmungen 18, 19.

Die Werkzeugaufnahme 1 weist ferner ein Betätigungselement 20 mit einem Hebel 21 auf, wobei der Hebel 21 mit einem innerhalb des Gehäuses 7 angeordneten Funktionselement 22 und einem sich außerhalb des Gehäuses 7 erstreckenden Griffabschnitt 23 versehen ist. Der Hebel 21 kann manuell betätigt werden; es ist aber auch denkbar, an eine Ausnehmung 49 des Hebels 21 einen, beispielsweise pneumatischen oder elektromotorischen oder hydromotorischen, Antrieb zur Hebelbetätigung anzuschließen.

Das Funktionselement 22 ist ringförmig ausgebildet und umgreift die Antriebswelle 4, wobei die Antriebswelle 4 zentrisch zum Funktionselement 22 angeordnet ist. Ferner weist das Funktionselement 22 einen derartigen Durchmesser auf und es ist an seiner Außenfläche derart konvex gewölbt, dass es in jeder Lage bis auf einen Bereich, in dem der Griffabschnitt 23 ansetzt, entlang des gesamten Umfanges gegen das Gehäuse 7 der Werkzeugaufnahme 1 anliegt.

Auf einer dem Antriebsmotor 3 zugewandten Seite des Funktionselementes 22 ist ein Nocken 24 angeordnet. Motorseitig liegt das Funktionselement 22, und zwar mittels des Nockens 24, gegen einen feststehenden Ring 25 an. Werkzeugseitig - das heißt an einer gegenüberliegenden, dem Antriebsmotor 3 abgewandten Seite - liegt das Funktionselement 22 mit einem weiteren, hier von der Antriebswelle 4 verdeckten Nocken gegen ein zylinderförmiges, in Axialrichtung bezogen auf die Rotationsachse 6 bewegbares Kontaktelement 26 an, das werkzeugseitig durch eine als Schraubenfeder ausgebildete Druckfeder 27 gegen einen Vorsprung 28 des Gehäuses 7 abgestützt ist. An einer dem Antriebsmotor 3 zugewandten Seite weist das Kontaktelement 26 eine ringförmige Schulter 29 auf, die sich senkrecht zur Rotationsachse 6 erstreckt.

Eine Manschette 30 mit einem umlaufenden Kragen 31 sitzt mittels eines Stiftes 39 verdrehgesichert auf der Antriebswelle 4. Der Kragen 31 ist parallel zu der Schulter 29 des Kontaktelementes 26 ausgerichtet und derartig dimensioniert, dass sich gegenüberliegende plane Oberflächen von Schulter 29 und Kragen 31 bei einer Verschiebung des Kontaktelementes 26 zum werkzeugseitigen Ende der Werkzeugaufnahme 1 hin in Kontakt kommen. Die Manschette 30 ist werkzeugseitig durch eine als Schraubenfeder ausgebildete Druckfeder 32 gegen eine Spindelachse 33 abgestützt.

Die Spindelachse 33 umschließt einen werkzeugseitigen Abschnitt der Antriebswelle 4 mit dem Kuppelelement 5 und die gesamte Spannzange 2. Mittels zweier Lager 34, 35, die hier als Wälzlager, und zwar speziell als Kugellager, ausgebildet und in dem Gehäuse 7 angeordnet sind, ist die Spindelachse 33 in der Werkzeugaufnahme 1 gelagert. Die Lager 34, 35 weisen einen möglichst großen Abstand voneinander auf, wodurch sich vorteilhaft eine bessere Rundlaufgenauigkeit des Werkzeuges ergeben kann.

Die Spannzange 2 ist in einer zentrischen Durchgangsausnehmung der Spindelachse 33 angeordnet und liegt an einem Axialanschlag 46 der Spindelachse 33 an. Bis zu dem Axialanschlag 46 weist die Spannzange 2 ausgehend von ihrem werkzeugseitigen Ende einen konstanten und danach einen kontinuierlich, zum Beispiel unter einem Winkel von 3°, fallenden Außendurchmesser auf. Die Spannzange 2 ist in die Spindelachse 33 eingepresst und eingeklebt.

Ist in der Werkzeugaufnahme 1 das hier nicht dargestellte Werkzeug eingespannt, so befindet sich der Hebel 21 in seiner Ruhestellung. In dieser Stellung, in welcher das Funktionselement 22 des Hebels 21 seine geringste axiale Ausdehnung einnimmt, wird der Hebel 21 durch die durch das Kontaktelement 26 übertragene Kraft der das Kontaktelement 26 abstützenden Druckfeder 27 gehalten. Wird der Hebel 21 in eine horizontale Lage bewegt, so vergrößert sich die axiale Ausdehnung des Funktionselementes 22, wodurch das bewegbare Kontaktelement 26 zum werkzeugseitigen Ende der Werkzeugaufnahme 1 hin verschoben wird. Dabei gelangen die beiden sich gegenüberliegenden planen Flächen der Schulter 29 und des Kragens 31 in Kontakt, so dass auch die Manschette 30 verschoben wird.

Da die Manschette 30 fest mit der Antriebswelle 4 verbunden ist, bewegen sich auch die Antriebswelle 4 und das Kuppelelement 5 zum werkzeugseitigen Ende der Werkzeugaufnahme 1 hin. Das Kuppelelement 5, das zwei in die Spannzange 2 eingreifende keilförmige Kuppelansätze 36, 37 aufweist, spreizt die Klemmfinger 38 der Spannzange 2 auseinander und gibt das Werkzeug frei, da die Spannzange 2 fest in der Spindelachse 33 angeordnet ist, wohingegen die Antriebswelle 4 mit dem Kuppelelement 5 in der Spindelachse 33 axial verschiebbar ist. Somit erfolgt ein Lösen des Werkzeuges aufgrund der Axialverschiebung des Kuppelelementes 5 gegenüber der Spannzange 2.

Beim Bewegen des Hebels 21 in seine Lösestellung bewegen sich auch die Verbindungsstifte 13, 14 der Kupplung 15 in Richtung des werkzeugseitigen Endes der Werkzeugaufnahme 1. Jedoch verlassen die Verbindungsstifte 13, 14 die Ausnehmungen 16, 17 der Kupplungsscheibe 11 nicht vollständig, so dass der Antrieb nicht ausgekuppelt wird. Wird der Antriebsmotor 3 vor einer Betätigung des Hebels 21 nicht ausgeschaltet, so tritt dennoch keine Beschädigung der Werkzeugaufnahme 1 ein, da die miteinander in Kontakt gelangenden Flächen des Kontaktelementes 26 und der Manschette 30, die Reibelemente einer Reibkupplung 47 bilden, die dann entstehende Reibungswärme aufnehmen und/oder an die Umwelt übertragen können. Die Reibkupplung 47 stellt ein wichtiges Sicherheitsbauteil dar. Ein Lösen der Spannzange 2 von der Antriebswelle 4 erfolgt nicht. Die Spannzange 2 öffnet, das heißt die Spannzange 2 gibt ein eingespanntes Werkzeug frei oder ist zur Aufnahme eines

Werkzeuges durch Einschieben in die Spannzange 2 bereit, wenn sich der Hebel 21 in einer die Lösestellung bildenden Endlage befindet, in der vorzugsweise auch der Antriebsmotor 3 vollständig gebremst und - im Falle eines elektrischen Antriebsmotors 3 - mit einem hohen Strom belastet wird.

Die Spannzange 2 weist in ihrem der Antriebswelle 4 zugewandten, das heißt hier motorseitigen, Endbereich einen ersten Innendurchmesser d1 und in ihrem der Antriebswelle 4 abgewandten, das heißt werkzeugseitigen, Endbereich einen zweiten Innendurchmesser d2 auf, wobei der zweite Innendurchmesser d2 größer ist als der erste Innendurchmesser d1.

Ferner ist in dem der Antriebswelle 4 abgewandten Endbereich der Spindelachse 33 eine radial nach außen ragende Scheibe 45 aus Polytetrafluorethylen (PTFE) auf der Spindelachse 33 zum Schutz der Werkzeugaufnahme 1 vor Verschmutzung angeordnet. Einem Verschmutzungsschutz dient auch eine Hülse 48, die einen Verbindungsgelenkbereich zwischen Betätigungselement 20 und Antriebswelle 4 abdeckt und bei Betätigung des Hebels 21 axial verschoben wird.

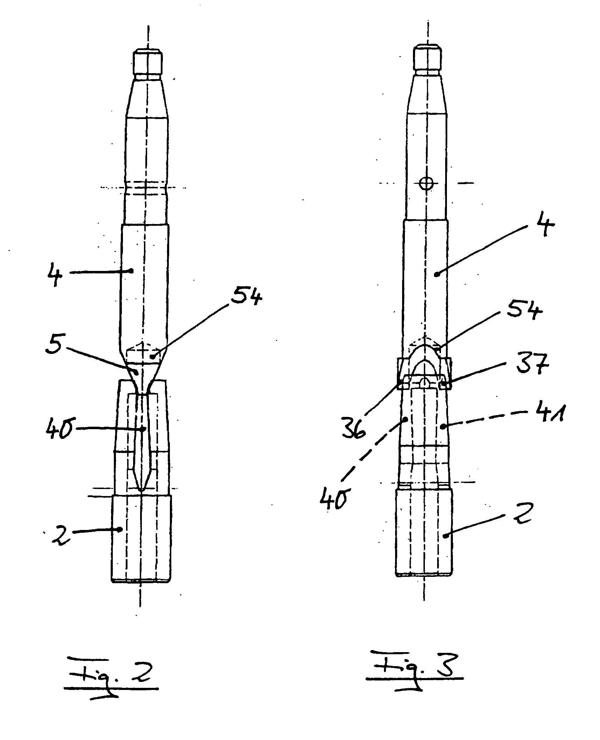

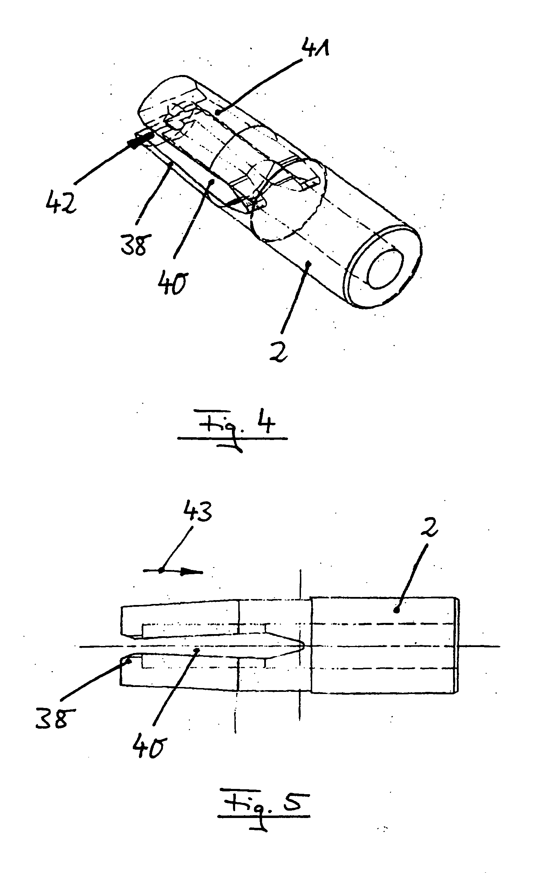

Figuren 2, 3 verdeutlichen die Ausgestaltung der Antriebswelle 4 und er Spannzange2 sowie die Verbindung dieser Bauteile, wobei die Figuren 2, 3 gegeneinander um 90° gedrehte Seitenansichten zeigen. Die Spannzange 2 weist zwei axial ausgerichtete Spannzangenschlitze 40, 41 auf, in welche jeweils ein Kuppelansatz 36, 37 des mit der Antriebswelle 4 verbundenen Kuppelelementes 5 axial eingreift.

In der Ausführungsform nach Figuren 2, 3 weist das Kuppelelement 5 eine zentrische Ausnehmung 54 in Form eines Sackloches auf, in die das Werkzeug eingreifen kann. Dadurch weist das Kuppelelement 5 ein gabelförmiges, in die Spannzange 2 eingreifendes Ende mit den Kuppelansätzen 36, 37 auf, die hier jeweils keilförmig ausgebildet sind. Es ist aber auch denkbar, auf die Ausnehmung 54 zu verzichten, so dass das in die Spannzange 2 eingreifende Ende des Kuppelelementes 5 als einfacher, durchgängiger Keil ausgebildet ist, der den gesamten Durchmesser der Spannzange 2 übergreift; das Werkzeug kann dann nicht mehr die Spannzange 2 in voller Länge durchgreifen und in das Kuppelelement 5 eingreifen.

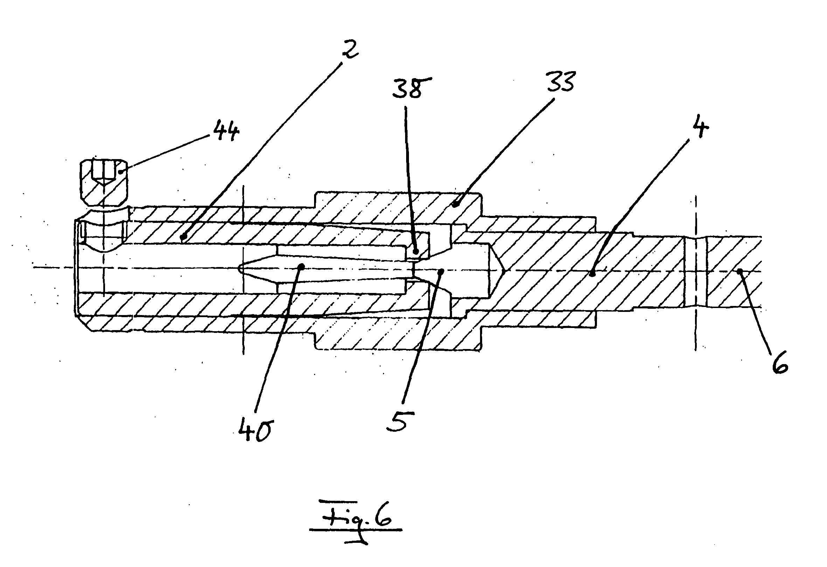

Eine perspektivische Ansicht der Spannzange 2 zeigt Figur 4. Es sind die Klemmfinger 38 und die zwischen diesen befindlichen Spannzangenschlitze 40, 41 zu erkennen. An dem der Antriebswelle 4 (siehe Figur 1) zugewandten Ende der Spannzange 2 bilden die Spannzangenschlitze 40, 41 jeweils eine Spannzangenöffnung 42.

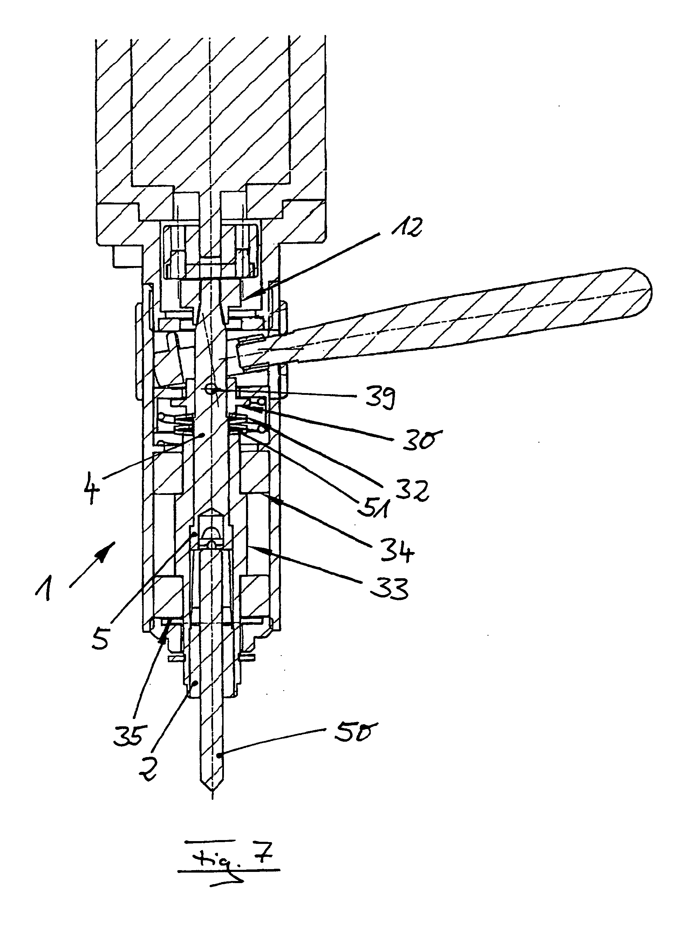

Figur 5 zeigt eine Seitenansicht der Spannzange 2. Die von den Klemmfingern 38 begrenzten und Spannzangenschlitze, von denen hier der in dieser Ansicht vorne liegende Spannzangenschlitz 40 erkennbar ist, weist in einer von der Antriebswelle 4 (siehe Figur 1) weg gewandten, durch einen Pfeil 43 symbolisierten Richtung eine zunehmende Schlitzbreite auf. Die Klemmfinger 38 klemmen das Werkzeug über die gesamte Länge gleichmäßig. Außerdem ist durch geometrisch abgestimmte Ausgestaltung der Klemmfinger 38 ein gleichmäßiges Öffnen der Spannzange 2 auf der ganzen Länge ermöglicht, wodurch das Werkzeug leicht entnehmbar ist.

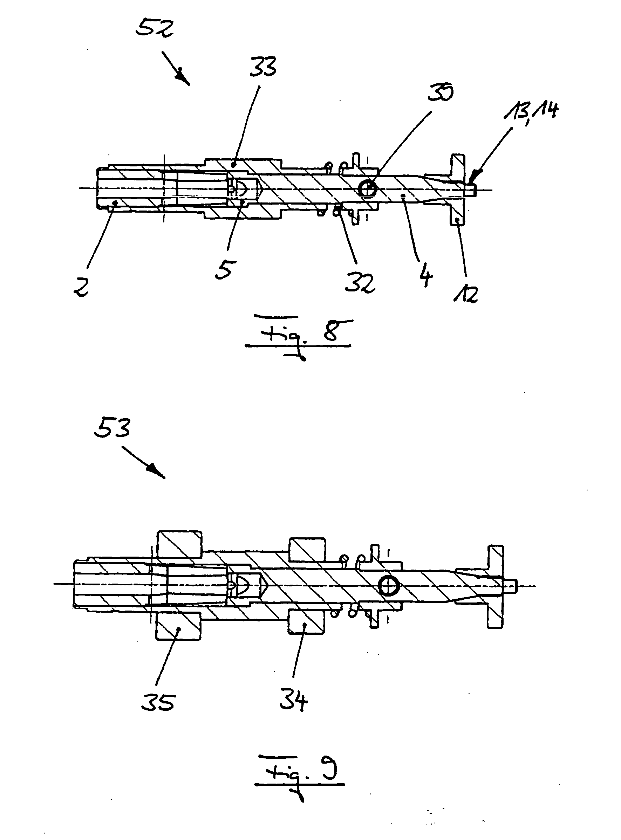

Ein weiteres Ausführungsbeispiel zeigt Figur 6 in einer Schnittansicht. In einer um eine Rotationsachse 6 rotierbaren Spindelachse 33 einer hier nicht weiter dargestellten Werkzeugaufnahme ist eine Antriebswelle 4 mit einem Kuppelelement 5 axial verschiebbar angeordnet. Das Kuppelelement 5 greift axial und zwischen Klemmfingern 38 in einen Spannzangenschlitz 40 einer Spannzange 2 ein, welche Spannzange 2 fest mit der Spindelachse 33 verbunden, insbesondere verklebt, ist. Zusätzlich ist eine als Innensechskantschraube ausgebildete Schraube 44 zur Arretierung der Spannzange 2 gegenüber der Spindelachse 33 vorgesehen. Mit der Schraube 44 kann die Ausziehkraft beispielsweise ausgehend von 500 N auf eine Größenordnung von über 500 N, zum Beispiel 700 bis 800 N, erhöht werden, was beispielsweise zur Bearbeitung, insbesondere Fräsen, von Aluminium, insbesondere bei niedrigen Geschwindigkeiten, vorteilhaft ist. Vorzugsweise kann symmetrisch zur Schraube 44 - hier nicht dargestellt - eine weitere, entsprechende Schraube vorgesehen sein.

Eine weitere Werkzeugaufnahme 1 mit einem Antriebsmotor 3 zeigt Figur 7 in einer Schnittansicht. Die Werkzeugaufnahme weist eine ein Werkzeug 50 halternde Spannzange 2 auf. Im Gegensatz zu dem Ausführungsbeispiel nach Figur 1 ist bei der Werkzeugaufnahme 1 nach Figur 7 eine aus Scheiben- oder Tellerfedern 51 zusammengesetzte, kaskadenförmige Scheiben- oder Tellerfederanordnung als Druckfeder 32 zwischen einer Manschette 30 und einer Spindelachse 33 angeordnet. Es müssen an einer die Spindelachse 33 mit als Kugellager ausgebildeten Lagern 34, 35, die Spannzange 2, ein Kuppelelement 5, eine Antriebswelle 4, die Druckfeder 32, die Manschette 30 mit einem Stift 39 und einen Aufsatz 12 umfassenden Montage- und Balancierungseinheit nach der Balancierung und vor der Montage keine Änderungen mehr vorgenommen werden. Dasselbe gilt auch für die weiter oben beschriebene Ausführungsform, bei der die zwischen Manschette 30 und Spindelachse 33 angeordnete Druckfeder 32 als Schraubenfeder ausgebildet ist (vergleiche Figur 1).

Eine Balancierungseinheit 52 einer hier nicht weiter dargestellten Werkzeugaufnahme zeigt Figur 8. Die Balancierungseinheit 52 umfasst eine Spindelachse 33 mit einer Spannzange 2, ein Kuppelelement 5, eine Antriebswelle 4, eine als Schraubenfeder ausgebildete Druckfeder 32, eine Manschette 30, einen als Innensechskantschraube ausgebildeten Stift 39 und einen Aufsatz 12. Dieser Aufsatz 12 (vergleiche auch Figur 1) ist mit als Axialstiften ausgebildeten Verbindungsstiften 13, 14 versehen. Eine Balancierung, das heißt ein Auswuchten, ist von großer Bedeutung, da in rotierenden Bauteilen der Werkzeugaufnahme regelmäßig enthaltene Unwuchten insbesondere bei hohen Werkzeugdrehzahlen andernfalls zu einem ungenügenden Rundlauf und erhöhtem Verschleiß führen würden. Durch das Auswuchten werden die Unwuchten ausgeglichen.

Nach erfolgter Balancierung wird die Balancierungseinheit um als Kugellager ausgebildete Lager 34, 35 ergänzt, so dass sich eine in Figur 9 dargestellte Montageeinheit 53 zum Einbau in die Werkzeugaufnahme ergibt. Eine Trennung von Balancierungseinheit 52 und Montageeinheit 53 - wie in dem Ausführungsbeispiel nach Figuren 8, 9 vorgesehen - ist vor allem aufgrund von Reinlichkeitserfordernissen vorteilhaft, da eine Balancierung ohne Lager 34, 35 vorgenommen werden kann.

## Patentansprüche

1. Werkzeugaufnahme für ein rotierbares Werkzeug, insbesondere Bohr- und/oder Fräskopf, mit einer mit einem Antriebsmotor verbindbaren Antriebswelle und mit einer mit der Antriebswelle drehfest verbundenen Spannzange zur Halterung des Werkzeuges, wobei die Antriebswelle und die Spannzange mittels eines Kuppelelementes zur Drehmomentübertragung formschlüssig verbunden sind, **dadurch gekennzeichnet, dass** das Kuppelelement (5) gegenüber der Spannzange (2) das Werkzeug lösend axial verschiebbar ist.

2. Werkzeugaufnahme nach Anspruch 1, **dadurch gekennzeichnet, dass** die Antriebswelle (4) und das Kuppelelement (5) ein einziges Bauteil bildend miteinander verbunden sind.

3. Werkzeugaufnahme nach einem der Ansprüche 1 und 2, **dadurch gekennzeichnet, dass** die Spannzange (2) in ihrem der Antriebswelle (4) zugewandten Endbereich einen ersten Innendurchmesser (d1) und in ihrem der Antriebswelle (4) abgewandten Endbereich einen zweiten Innendurchmesser (d2) aufweist, wobei der zweite Innendurchmesser (d2) größer ist als der erste Innendurchmesser (d1).

4. Werkzeugaufnahme nach einem der vorhergehenden Ansprüche, **dadurch gekennzeichnet, dass** das Kuppelelement (5) zumindest einen in die Spannzange (2) eingreifenden Kuppelansatz (36; 37) aufweist.

5. Werkzeugaufnahme nach Anspruch 4, **dadurch gekennzeichnet, dass** der Kuppelansatz (36; 37) an seinem der Spannzange (2) zugewandten Ende einen Keil aufweist.

6. Werkzeugaufnahme nach einem der vorhergehenden Ansprüche, **dadurch gekennzeichnet, dass** das Kuppelelement (5) an einem der Spannzange (2) zugewandten Ende eine zentrische Ausnehmung (54) aufweist.

7. Werkzeugaufnahme nach einem der vorhergehenden Ansprüche, **dadurch gekennzeichnet, dass** die Spannzange (2) zumindest einen axial ausgerichteten Spannzangenschlitz (40; 41) aufweist und dass der Kuppelansatz (36; 37) in den Spannzagenschlitz (40; 41) eingreift.

8. Werkzeugaufnahme nach Anspruch 7, **dadurch gekennzeichnet, dass** der Spannzangenschlitz (40; 41) an dem der Antriebswelle (4) zugewandten Ende der Spannzange (2) eine axiale Spannzangenöffnung (42) bildet.

9. Werkzeugaufnahme nach einem der Ansprüche 7 und 8, **dadurch gekennzeichnet, dass** der Spannzangenschlitz (40; 41) in einer von der Antriebswelle (4) weg gewandten Richtung eine zunehmende Schlitzbreite aufweist.

10. Werkzeugaufnahme nach einem der vorhergehenden Ansprüche, **dadurch gekennzeichnet, dass** eine die Antriebswelle (4) und die Spannzange (2) halternde Spindelachse (33) vorgesehen ist.

11. Werkzeugaufnahme nach Anspruch 10, **dadurch gekennzeichnet, dass** die Spannzange (2) in einer zentrischen Durchgangsausnehmung der Spindelachse (33) angeordnet ist und an einem Axialanschlag (46) der Spindelachse (33) anliegt.

12. Werkzeugaufnahme nach Anspruch 10 oder 11, **dadurch gekennzeichnet, dass** die Spannzange (2) in der Spindelachse (33) fest gelagert ist.

13. Werkzeugaufnahme nach Anspruch 12, **dadurch gekennzeichnet, dass** eine die Spannzange (2) gegenüber der Spindelachse (33) arretierende Schraube (44) vorgesehen ist.

14. Werkzeugaufnahme nach einem der vorhergehenden Ansprüche, **dadurch gekennzeichnet, dass** eine einer Axialverschiebung des Kuppelelementes (5) entgegenwirkende Druckfeder (27) vorgesehen ist.

15. Werkzeugaufnahme nach einem der vorhergehenden Ansprüche, **dadurch gekennzeichnet, dass** eine Reibkupplung (47) zur Übertragung einer die Axialverschiebung des Kuppelelementes (5) bewirkenden Axialkraft auf das Kuppelelement (5) vorgesehen ist.

16. Werkzeugaufnahme nach Anspruch 15, **dadurch gekennzeichnet, dass** die Reibkupplung (47) ein erstes, fest mit der Antriebswelle (4) verbundenes Reibelement und ein zweites, an das erste Reibelement zur Anlage bringbares und gegenüber der Antriebswelle (4) axial verschiebbares Reibelement aufweist.

17. Werkzeugaufnahme nach Anspruch 16, **dadurch gekennzeichnet, dass** das erste Reibelement und das zweite Reibelement werkzeugseitig gegen jeweils eine Druckfeder (27, 32) abgestützt sind.

18. Werkzeugaufnahme nach einem der vorhergehenden Ansprüche, **dadurch gekennzeichnet, dass** ein manuell bedienbares Betätigungselement (20) zur Axialverschiebung des Kuppelelementes (5) vorgesehen ist.

19. Werkzeugaufnahme nach einem der vorhergehenden Ansprüche, **dadurch gekennzeichnet, dass** ein pneumatisch oder elektromotorisch oder hydromotorisch bedienbares Betätigungselement (20) zur Axialverschiebung des Kuppelelementes (5) vorgesehen ist.

20. Werkzeugaufnahme nach einem der Ansprüche 18 und 19, **dadurch gekennzeichnet, dass** eine axial bewegbare Hülse (48) zur Abdeckung eines Verbindungsgelenkbereiches zwischen Betätigungselement (20) und Kuppelelement (5) und/oder Antriebswelle (4) vorgesehen ist.

21. Werkzeugaufnahme nach einem der vorhergehenden Ansprüche, **dadurch gekennzeichnet, dass** die Antriebswelle (4) motorseitig eine die Antriebswelle (4) mit einer Motorabtriebswelle (9) verbindende, unabhängig von der Axialverschiebung des Kuppelelementes (5) in Eingriff befindliche Kupplung (15) aufweist.

22. Werkzeugaufnahme nach einem der vorhergehenden Ansprüche, **dadurch gekennzeichnet, dass** in dem der Antriebswelle (4) abgewandten Endbereich der Spannzange (2) oder in dem der Antriebswelle (4) abgewandten Endbereich der Spindelachse (33) eine radial nach außen ragende Scheibe (45) auf der Spannzange (2) beziehungsweise der Spindelachse (33) angeordnet ist.

23. Werkzeugaufnahme nach Anspruch 22, **dadurch gekennzeichnet, dass** die Scheibe (45) aus Polytetrafluorethylen besteht.

## Claims

1. Tool holder for a rotatable tool, in particular a drill and/or milling head, comprising a drive shaft which can be connected to a drive motor, and a collet chuck which is rotationally engaged with the drive shaft for holding the tool, the drive shaft and the collet chuck being connected with an interlocking fit by means of a coupling element for transmission of torque, **characterised in that** the coupling element (5) is axially displaceable relative to the collet chuck (2) in order to release the tool.

2. Tool holder according to claim 1, **characterised in that** the drive shaft (4) and the coupling element (5) are connected to each other so as to form a single component.

3. Tool according to one of claims 1 and 2, **characterised in that** the collet chuck (2), in its end region facing the drive shaft (4), has a first interior diameter (d1) and, in its end region remote from the drive shaft (4), has a second interior diameter (d2), the second interior diameter (d2) being greater than the first interior diameter (d1).

4. Tool holder according to any one of the preceding claims, **characterised in that** the coupling element (5) has at least one coupling lug (36; 37) which engages in the collet chuck (2).

5. Tool holder according to claim 4, **characterised in that** the coupling lug (36; 37) has a wedge at its end facing the collet chuck (2).

6. Tool holder according to any one of the preceding claims, **characterised in that** the coupling element (5) has a central recess (54) at an end facing the collet chuck (2).

7. Tool holder according to any one of the preceding claims, **characterised in that** the collet chuck (2) has at least one axially aligned slot (40; 41) and **in that** the coupling lug (36; 37) engages in the slot (40; 41) in the collet chuck.

8. Tool holder according to claim 7, **characterised in that** the slot (40; 41) in the collet chuck forms an axial opening (42) in the collet chuck at the end of the collet chuck (2) facing the drive shaft (4).

9. Tool holder according to one of claims 7 and 8, **characterised in that** the width of the slot (40; 41) in the collet chuck increases in a direction heading away from the drive shaft (4).

10. Tool holder according to any one of the preceding claims, **characterised in that** there is provided a spindle shaft (33) holding the drive shaft (4) and the collet chuck (2).

11. Tool holder according to claim 10, **characterised in that** the collet chuck (2) is arranged in a central through-recess in the spindle shaft (33) and abuts an axial stop (46) of the spindle shaft (33).

12. Tool holder according to claim 10 or 11, **characterised in that** the collet chuck (2) is rigidly mounted in the spindle shaft (33).

13. Tool holder according to claim 12, **characterised in that** a screw (44) which locks the collet chuck (2) relative to the spindle shaft (33) is provided.

14. Tool holder according to any one of the preceding claims, **characterised in that** a compression spring (27) which opposes an axial displacement of the coupling element (5) is provided.

15. Tool holder according to any one of the preceding claims, **characterised in that** a friction coupling (47) is provided for transferring to the coupling element (5) an axial force causing the axial displacement of the coupling element (5).

16. Tool holder according to claim 15, **characterised in that** the friction coupling (47) has a first friction element rigidly connected to the drive shaft (4), and a second friction element which can be brought into contact with the first friction element and is axially displaceable relative to the drive shaft (4).

17. Tool holder according to claim 16, **characterised in that** the first friction element and the second friction element are each supported at the tool side by a compression spring (27, 32).

18. Tool holder according to any one of the preceding claims, **characterised in that** an actuating element (20) which can be operated manually is provided for axially displacing the coupling element (5).

19. Tool holder according to any one of the preceding claims, **characterised in that** an actuating element (20) which can be operated pneumatically or by an electric motor or by a hydraulic motor is provided for axially displacing the coupling element (5).

20. Tool holder according to one of claims 18 and 19, **characterised in that** an axially displaceable sleeve (48) is provided for covering a connection joint region between the actuating element (20) and the coupling element (5) and/or the drive shaft (4).

21. Tool holder according to any one of the preceding claims, **characterised in that** the drive shaft (4) has a coupling (15) which connects the drive shaft (4) at its motor end to a motor-driven shaft (9) and which is engaged irrespective of the axial displacement of the coupling element (5).

22. Tool holder according to any one of the preceding claims, **characterised in that**, in the end region of the collet chuck (2) remote from the drive shaft (4) or in the end region of the spindle shaft (33) remote from the drive shaft (4), a disc (45) which projects radially outwards is arranged on the collet chuck (2) or on the spindle shaft (33).

23. Tool holder according to claim 22, **characterised in that** the disc is made of polytetrafluoroethane.

## Revendications

1. Logement d'outil destiné à un outil rotatif, en particulier une tête de forage et/ou de fraisage, comportant un arbre d'entraînement pouvant être relié à un moteur d'entraînement et une pince de serrage reliée de manière résistante à la rotation à l'arbre d'entraînement afin de maintenir l'outil, moyennant quoi l'arbre d'entraînement et la pince de serrage sont reliés par conjugaison de forme à l'aide d'un élément d'accouplement afin de transmettre le couple de rotation, **caractérisé en ce que** l'élément d'accouplement (5) peut déplacer axialement l'outil de manière amovible par rapport à la pince de serrage (2).

2. Logement d'outil selon la revendication 1, **caractérisé en ce que** l'arbre d'entraînement (4) et l'élément d'accouplement (5) sont reliés l'un à l'autre en formant un seul composant.

3. Logement d'outil selon la revendication 1 ou 2, **caractérisé en ce que** la pince de serrage (2) présente, dans sa zone d'extrémité orientée vers l'arbre d'entraînement (4), un premier diamètre interne (d1) et, dans sa zone d'extrémité opposée à l'arbre d'entraînement (4), un deuxième diamètre interne (d2), moyennant quoi le deuxième diamètre interne (d2) est supérieur au premier diamètre interne (d1).

4. Logement d'outil selon l'une quelconque des revendications précédentes, **caractérisé en ce que** l'élément d'accouplement (5) présente au moins un insert d'accouplement (36 ; 37) s'engrenant dans la pince de serrage (2).

5. Logement d'outil selon la revendication 4, **caractérisé en ce que** l'insert d'accouplement (36 ; 37) présente une cale au niveau de son extrémité orientée vers la pince de serrage (2).

6. Logement d'outil selon l'une quelconque des revendications précédentes, **caractérisé en ce que** l'élément d'accouplement (5) présente, au niveau de son extrémité orientée vers la pince de serrage (2), un évidement (54) centralisé .

7. Logement d'outil selon l'une quelconque des revendications précédentes, **caractérisé en ce que** la pince de serrage (2) présente au moins une fente de pince de serrage (40 ; 41) orientée axialement et **en ce que** l'insert d'accouplement (36 ; 37) s'engrène dans la fente de la pince de serrage (40 ; 41).

8. Logement d'outil selon la revendication 7, **caractérisé en ce que** la fente de la pince de serrage (40 ; 41) forme, au niveau de l'extrémité orientée vers l'arbre d'entraînement (4) de la pince de serrage (2), une ouverture de pince de serrage axiale (42).

9. Logement d'outil selon la revendication 7 ou 8, **caractérisé en ce que** la fente de la pince de serrage (40 ; 41) présente une largeur de fente croissante dans un sens s'éloignant de l'arbre d'entraînement (4).

10. Logement d'outil selon l'une quelconque des revendications précédentes, **caractérisé en ce qu'**un axe de broche (33) maintenant l'arbre d'entraînement (4) et la pince de serrage (2) est prévu.

11. Logement d'outil selon la revendication 10, **caractérisé en ce que** la pince de serrage (2) est disposée dans un évidement de passage centralisé de l'axe de broche (33) et repose sur une butée axiale (46) de l'axe de broche (33).

12. Logement d'outil selon la revendication 10 ou 11, **caractérisé en ce que** la pince de serrage (2) est disposée de manière fixe dans l'axe de broche (33).

13. Logement d'outil selon la revendication 12, **caractérisé en ce qu'**une vis (44) bloquant la pince de serrage (2) par rapport à l'axe de broche (33) est prévue.

14. Logement d'outil selon l'une quelconque des revendications précédentes, **caractérisé en ce qu'**il est prévu un ressort de rappel (27) agissant à l'encontre d'un déplacement axial de l'élément d'accouplement (5).

15. Logement d'outil selon l'une quelconque des revendications précédentes, **caractérisé en ce qu'**il est prévu un accouplement par frottement (47) permettant de transmettre une force axiale provoquant le déplacement axial de l'élément d'accouplement (5) à l'élément d'accouplement (5).

16. Logement d'outil selon la revendication 15, **caractérisé en ce que** l'accouplement par frottement (47) présente un premier élément de frottement relié fermement à l'arbre d'entraînement (4) et un deuxième élément de frottement pouvant se déplacer axialement par rapport à l'arbre d'entraînement (4) et pouvant se placer sur le premier élément de frottement.

17. Logement d'outil selon la revendication 16, **caractérisé en ce que** le premier élément de frottement et le deuxième élément de frottement sont soutenus, du côté de l'outil, respectivement contre un ressort de rappel (27, 32).

18. Logement d'outil selon l'une quelconque des revendications précédentes, **caractérisé en ce qu'**un élément d'actionnement (20) pouvant être activé manuellement est prévu afin de déplacer axialement l'élément d'accouplement (5).

19. Logement d'outil selon l'une quelconque des revendications précédentes, **caractérisé en ce qu'**un élément d'actionnement (20) pouvant être activé par voie pneumatique ou électromotrice ou hydromotrice est prévu afin de déplacer axialement l'élément d'accouplement (5).

20. Logement d'outil selon la revendication 18 ou 19, **caractérisé en ce qu'**une douille (48) mobile axialement est prévue afin de recouvrir une zone articulée de jonction entre l'élément d'actionnement (20) et l'élément d'accouplement (5) et/ou l'arbre d'entraînement (4).

21. Logement d'outil selon l'une quelconque des revendications précédentes, **caractérisé en ce que** l'arbre d'entraînement (4) présente, du côté du moteur, un accouplement (15) reliant l'arbre d'entraînement (4) à un arbre de sortie du moteur (9), et venant en prise indépendamment du déplacement axial de l'élément d'accouplement (5).

22. Logement d'outil selon l'une quelconque des revendications précédentes, **caractérisé en ce que**, dans la zone d'extrémité opposée à l'arbre d'entraînement (4) de la pince de serrage (2) ou dans la zone d'extrémité opposée à l'arbre d'entraînement (4) de l'axe de la broche (33), est disposé un disque (45) faisant saillie radialement vers l'extérieur sur la pince de serrage (2) respectivement sur l'axe de la broche (33).

23. Logement d'outil selon la revendication 22, **caractérisé en ce que** le disque (45) est réalisé en polytétrafluoréthylène.
